# EUROPEAN PATENT APPLICATION

(11) **EP 2 735 554 A1**
(43) Date of publication of application: **28.05.2014**
(21) Application number: 12306453.7
(22) Date of filing: 22.11.2012
(51) Int. Cl.: C04B 7/44, C10L 5/00, F26B 3/00, C04B 7/43, F26B 3/10

(54) **Process and equipment for drying solid wastes using gas from cement clinker cooler**

(71) Applicant: LAFARGE, 75116 Paris (FR)
(72) Inventor: Koeck, Bernhard, 2391 KALTENLEUTGEBEN (AT)
(74) Representative: Mérigeault, Shona

(57) **Abstract**

The invention relates to a process for drying solid wastes comprising:
- providing a drying pipe (40) comprising an upwards section (44);
- feeding solid wastes to be dried at a feeding point (32), located at the bottom of said upwards section;
- feeding a drying gas in said upwards section at a speed superior to 15 m/s, in particular to 20 m/s, said drying gas comprising exhaust gas from a clinker cooler, so as to create an upwards flow of said wastes in said upwards section; and
- separating a final drying gas and dried solid wastes, downstream drying pipe.

The invention also relates to an equipment for drying solid waste.

## Description

The present invention relates to a process and an equipment for drying solid wastes, a process for manufacturing cement clinker including this drying process, and a clinker plant comprising this drying equipment.

In conventional cement clinker manufacturing processes, raw meal is conducted to a pyro-processing area, which may include preheaters and calciners to condition raw meal for introduction into a rotary kiln, where clinker is produced. The main kiln and the calciners are heated with a burner using coal, oil or gas as fuel component. At the discharged end of the rotary kiln, hot clinker is introduced into a cooler wherein large amounts of air are blown through clinker bed, in order to reduce its temperature to about 80°C.

One of the largest cost items in the manufacture of cement clinker is the cost of fuel. With ever increasing prices for coal, oil and gas, alternate fuel sources are constantly sought for use in this manufacturing process.

In this respect, the use of shredded solid wastes is of interest. However, this type of wastes usually has a high moisture that reduces its efficiency as fuel. As a way of example, solid wastes with original 25% moisture have a Low Heat Value of 18.000 kJ/kg, while these solid wastes have an improved Low Heat Value of 23.500 kJ/kg after drying to residual 5% moisture.

Therefore, there is a need for drying these wastes, before they are introduced into the kiln and/or the calciner. A first known type of solutions uses drum and belt dryers, wherein solids to be dried are put into contact with gas. However they are cumbersome, expensive, and are not easily accessible.

Moreover US 7,434,332 teaches to use a contact dryer, wherein wastes are driven before introduction into the kiln or the calciner. Gas from clinker cooler is fed to this dryer, in order to treat the wastes. However such a solution has drawbacks. First it implies high costs to build this dryer and its connections to other parts of the cement plant. Moreover, during the course of this process, the residence time of the wastes is very high.

In view of the above, the technical problem that the present invention seeks to solve is to provide a process which enables the drying of wastes in a quick and simple manner, and which can be carried out using cheap devices.

Surprisingly, the applicants have discovered that a flash type drying process, wherein solid wastes to be dried are driven upwards by a high speed gas, leads to unexpected positive results.

Accordingly, the present invention provides a process for drying solid wastes comprising:
- providing a drying pipe comprising an upwards section;
- feeding solid wastes to be dried at a feeding point, located at the bottom of the upwards section;
- feeding a drying gas in this upwards section at a speed superior to 15 m/s, in particular to 20 m/s, said drying gas comprising exhaust gas from a clinker cooler, so as to create an upwards flow of said wastes in this upwards section; and
- separating a final drying gas and dried solid wastes, downstream drying pipe.

The present invention pertains to use of solid wastes as fuel or fuel additive in a cement clinker manufacturing process. Solid wastes are defined as non-soluble, discarded solid materials, including among others sewage sludge, municipal garbage, industrial wastes, agricultural refuse, demolition wastes and mining residues.

Solid wastes used in the present invention have a largest dimension that is inferior to 70 millimeters, in particular to 50 millimeters. In order to suit this requirement, wastes usually undergo a treatment step, in view of their size reduction, typically shredding.

In the present description and claims, "superior to" and "inferior to" respectively mean "superior or equal to" and "inferior or equal to". Moreover, "upstream" and "downstream" refer to gas flow in normal operation.

The upwards section of drying pipe is preferably substantially vertical. In this respect, the global angle of this section towards vertical direction is inferior to 30°.

Solid wastes are fed at the feeding point, which is located at the bottom of drying pipe. Drying gas is also fed into this pipe. This gas has a substantial fraction of exhaust gas from clinker cooler. This exhaust gas may be diluted with further gas, in particular fresh air, in order to control the temperature of the global drying gas at the inlet of the pipe.

Wastes are driven upwards, due to the fast flow of drying gas. During their travel along the pipe, wastes are mixed with hot gas, so that they are unexpectedly well dried at the outlet of the pipe. The drying pipe may be constituted of a single upwards section, or also may comprise at least a further section, which is located downstream upwards section.

A typical gas speed at the inlet of upwards section is 15 to 35 m/s (meters per second), depending on the wastes properties, and the way wastes are introduced into the pipe. This speed refers to gas speed at the feeding point. As is known in the art, gas speed gets gradually down along the pipe. Moreover solids speed is inferior to gas speed, and varies as a function of the nature of solid particles, in particular their density and size.

In this respect, wastes may be introduced into drying pipe thanks to any appropriate means, in particular with mechanical or pneumatic means. During the upwards motion of the wastes, some heavy particles may fall down and may to be removed. The gas speed in the upwards section may be adjusted to optimise this potential fall through of heavy particles.

At the outlet of drying pipe, a mixture of gas and dried solid wastes enters separation means. Separation operation may comprise one or more steps, which may be carried out in a usual manner. After separation, dried wastes are driven to a burner of the plant, which may be the kiln burner and/or the calciner burner.

The present invention may present one or more of the following advantages.

The drying process of the invention may be carried out in a very simple manner. Moreover, this process may use only few mechanical elements, which have a simple structure and a low cost.

Moreover, the residence time of solid wastes is much lower than in prior art drying processes. Therefore, according to the invention, dried solid wastes may be directly injected into the burner without further dosing or storage. This is to be compared with the above described known solutions, which imply at least two steps of dosing, due to a much higher residence time of the wastes.

According to an advantageous embodiment, the gas residence time in drying pipe is less than approximately 5 seconds, and in particular is from 1 to 5 seconds, preferably from 1.5 to 3 seconds. As known in the art, solid residence time is longer.

According to an advantageous embodiment, the height of the upwards section is more than approximately 20 meters, and in particular is from 30 to 40 meters.

According to an advantageous embodiment, the cross-section, in particular the diameter, of drying pipe is less than approximately 1500 mm (millimeters), and in particular is from 500 mm to 1000 mm.

According to an advantageous embodiment, the whole length of drying pipe is more than approximately 25 meters, and in particular is from 30 to 80 meters.

According to an advantageous embodiment, wastes are fed at feeding point with an upwards speed, in particular an upwards speed superior to 20 m/s. This allows a lower gas speed in the pipe, which remains sufficient to avoid excessive fall through of solids in the upwards section. Therefore, the residence time of solids in drying pipe may be increased, which promotes mixing and the quality of drying. It is to be noted that, even if the last sentence refers to an increased residence time, the latter is still far inferior to that of processes according to prior art.

According to an advantageous embodiment, drying gas is fed into drying pipe at a temperature from 125°C to 300°C, preferably from 150°C to 220°C. This temperature depends in particular on the moisture value of the solid wastes to be dried. Preferably the upper temperature limit may not be over-passed to avoid ignition, and to avoid high temperature agglomeration of potential plastic parts of the members of the equipment.

According to an advantageous embodiment, the flow rate of exhaust gas fed in the drying pipe is from 2 Nm³ to 15 Nm³ per kilogram of treated wastes, preferably from 2 Nm³ to 8 Nm³ per kilogram of treated wastes.

According to an advantageous embodiment, the volume proportion of exhaust gas, in total drying gas, is superior to 20%, preferably superior to 40%. The volume proportion of exhaust gas depends in particular on the temperature of this gas when it leaves the cooler, as well as the nature of de-dusting apparatus upstream drying pipe.

According to an advantageous embodiment, exhaust gas is diluted with fresh air before feeding point, and the flow rate of fresh air is controlled as a function of the temperature of drying gas downstream drying pipe. This embodiment makes it possible to control in a simple and accurate manner the parameters of drying air.

According to an advantageous embodiment, the drying pipe also comprises a downwards section, separated from upwards section by a curve section. This promotes mixing of gas and solids and increases the global length of the drying pipe and therefore the global residence time, while increasing as less as possible the global height of this pipe, which lowers its cumbersomeness.

The present invention also provides a process for manufacturing cement clinker, comprising drying solid wastes with a drying process as defined above, feeding dried solid wastes as a fuel in a burner of a calciner and/or in a burner of a kiln, calcining raw meal in said calciner and sintering raw meal in said kiln to obtain said cement clinker.

According to an advantageous embodiment, final drying gas is sent to the clinker cooler. In this case, this final drying gas may be sent to the inlet fan of at least one compartment of this clinker cooler, connected with an upstream chamber receiving fresh air, via a fresh air line provided with a mobile flap.

The present invention also provides an equipment for drying solid wastes comprising:
- a drying pipe comprising at least an upwards section;
- a means for feeding solid wastes to be dried at a feeding point, located at the bottom of the upwards section;
- a means for feeding a drying gas in this upwards section at a speed superior to 15 m/s, in particular to 20 m/s, said drying gas comprising exhaust gas from a clinker cooler, so as to create an upwards flow of said waste in this upwards section;
- a means for separating a final drying gas and dried solid wastes.

The drying pipe of this equipment may comprise any of the features, listed above in reference to the drying process of the invention.

The equipment of the invention is in particular adapted to carry out the drying process of the invention, as defined above.

The present invention also provides a plant for manufacturing cement clinker, comprising a calciner to calcine raw meal, a kiln for sintering a raw meal, and an equipment as defined above, said plant also comprising means for delivering said dried solid wastes, said delivering means being connected with a burner of said calciner and/or a burner of said kiln.

According to an advantageous embodiment, the plant also comprises a clinker cooler provided with several compartments, the inlet fan of at least one of said compartments being connected with a preliminary chamber receiving a fresh air line provided with a mobile flap, as well as a further line for feeding final drying gas.

The invention is further illustrated in the accompanying drawings, wherein:
Figure 1 shows a schematic diagram of a drying equipment according to the invention;
Figure 2 shows, at a larger scale, a part of a drying pipe which belongs to the drying equipment of figure 1;
Figure 3 shows a kiln and a cooler, which may be in gas communication with the drying equipment of figure 1; and
Figure 4 shows, at a larger scale, a part of the cooler illustrated in figure 3.

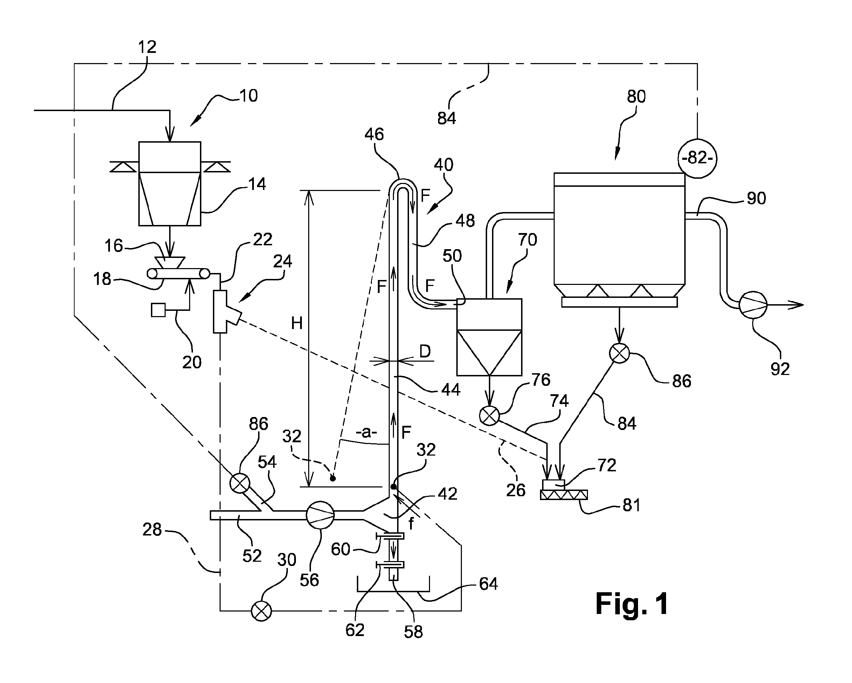

Figure 1 shows an equipment for drying solid wastes, according to the present invention. This equipment comprises dosing means 10, which enable to feed a controlled flow rate of wastes. These dosing means comprise a feeding line 12 wherein solid wastes, as defined above, circulate. These wastes have been treated in an appropriate manner in view of a reduction of their size, especially via a shredder. These wastes are then fed, via a hopper 14, in a container 16 which circulates on an endless belt 18. The speed of the belt is controlled by usual control means 20. Various other feeder types can be used, such as rotating cells. Not shown shredder and the components 12 to 20 of dosing means are known as such, and will not be described more in detail.

Dosed solid wastes are then fed, via a line 22, into an optional diverter 24, which is used to bypass drying pipe in case of problems, via line 26. In normal operation, all the wastes exit the diverter 24 along line 28, via a valve 30, thanks to a not shown pneumatic injection device. Wastes are then fed into said drying pipe. 32 is denoted as the connection point between feeding line 28 and drying pipe. 32 is also called feeding point.

Drying pipe, which is given as a whole reference numeral 40, comprises an inlet section 42, an upwards section 44, where solid wastes and gas may flow upwards, a curve section 46, and a downwards section 48, where solid wastes and gas may flow downwards. Inlet section 42 is connected to an exhaust line 52 from a clinker cooler, which is not illustrated on figure 1. A further line 54, which feeds fresh air at ambient temperature, is connected to exhaust line 52. A booster fan 56, known as such, is also provided immediately upstream inlet section 42.

Inlet section 42 is also connected to a refusal pipe 58, wherein large particles may fall from upwards section 44, due to gravity. This pipe 58 is provided with two successive gates 60 and 62 that are driven by any appropriate means, in particular manually or pneumatically. A refusal container 64 is provided, under the exit of pipe 58.

The whole length of the drying pipe corresponds to the distance between feeding point 32 and the outlet 50 of the downwards section 48. Suitably this length is from 25 to 100 meters, preferably from 30 to 80 meters. D is denoted as the diameter of the drying pipe, which may be constant or may slightly vary along the two sections 44 and 48. Suitably D is from 500 to 1500 mm, preferably from 500 to 1000 mm. H is denoted as the height of the upwards section, from feeding point 32 to connection with curve section. Suitably H is from 20 to 40 meters, preferably from 30 to 40 meters.

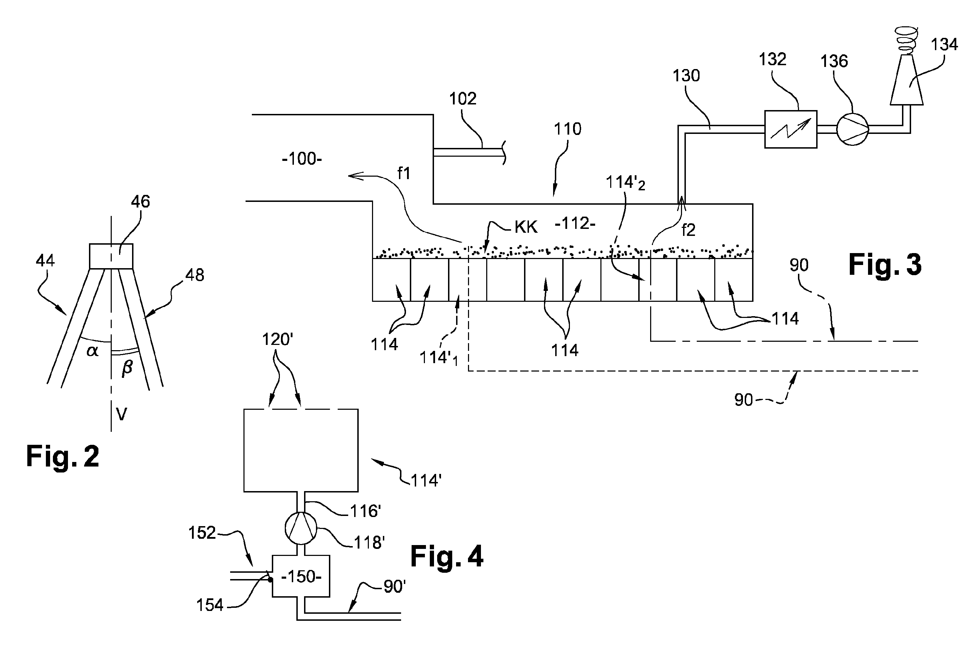

Curve section ensures a function of further mixing between drying gas and solid wastes to be dried. This section may be designed as a pipe forming a substantially 180° angle. As an alternative, shown in figure 2, this section may be designed as a box or a chamber, with two ports respectively connected with upwards and downwards sections.

In the example of figure 1, both upwards and downwards sections 44 and 48 extend along a vertical direction, from curve section. As an alternative, whole upwards section 44 may have a slight angle (a) towards vertical direction, which is illustrated in dotted lines on figure 1. This angle is preferably inferior to 30°, more preferably inferior to 20°.

Moreover, at least one portion of upwards section may have a greater slope than angle (a). However, in order to promote good mixing, this maximal slope is preferably inferior to 40°, more preferably inferior to 25°, referring to vertical direction.

As a further alternative (see figure 2), the upper end of at least one of sections 44 and 48 may have an angle towards vertical direction. If V is a vertical line extending via the middle of curve section 46, α is the angle between V and upwards section 44, whereas β is the angle between V and downwards section 48. Preferably, α is from 0° to 20°, β is from 0° to 40°, whereas the total angle (α+β) is from 0° to 60°.

The drying apparatus of figure 1 also comprises means for separating dried solid wastes from drying gas. These means first comprise a cyclone 70, known as such, the inlet of which is connected to the outlet 50. This cyclone has a first outlet, for feeding solid wastes to a reception means 72, via a line 74 provided with a valve 76. Reception means 72, which are of any appropriate kind, also receive potentially untreated solid wastes, via above described line 26.

The second outlet of cyclone extends to the inlet of a bag filter 80, known as such, also belonging to separation means. This bag filter has a first outlet, for feeding solid wastes to reception means 72, via a line 84 provided with a valve 86. The second outlet of the bag filter is connected to an exhaust line 90, provided with a sucking fan 92.

In operation, dosing means are used in a known manner, so as to deliver a predefined flow rate of solid wastes to the feeding point 32. By way of example, this feeding flow rate is from 0,5 t/h to 5 t/h. Advantageously, solid wastes are delivered at point 32 with an upwards speed SW (shown by arrow f) which is between 0 and 35 m/s. As an alternative, gravimetric feeding of the wastes, without any upwards speed or even with downwards falling, is possible. This is compensated by higher upwards gas speed in the pipe 40.

At the same time, fans 56 and 92 blow exhaust gas and fresh air in respective lines 52 and 54, so as to admit drying gas at feeding point 32. Cooler exhaust gas is preferably de-dusted by any appropriate way, in particular an electro-filter, a bag filter with high temperature bags, or a take-off with cyclone. Suitably, at its arrival in 32, drying gas has a temperature from 125° to 300°C, preferably from 150 to 220°C, and a typical upwards speed SG from 15 to 35 m/s. Typical flow rate of exhaust gas fed in the drying pipe is from 2 Nm³ to 15 Nm³, preferably from 2 Nm³ to 8 Nm³, referring to one kilogram of treated wastes.

Due to upwards motion of drying gas, solid wastes entering pipe 40 at point 32 are first lifted along upwards section 44, and are admitted in curve section 46, which promotes further mixing of solid wastes and drying gas. Thereafter solid wastes are driven to outlet 50, via downwards section 48. The motion of wastes is shown by arrows F. During their travel along sections 44, 46 and 48, solid wastes are dried due to action of hot gas. Gas residence time is typically from 1 to 5 seconds, between feeding point 32 and outlet 50.

The heaviest solid particles do not reach curve section but fall into refusal pipe, due to gravity. These particles correspond to solid wastes that have not been properly shredded, or to other undue particles such as stones, glass, or metals. They fall against the upper face of gate 60. The latter is first opened, while gate 62 is kept closed, so that particles fall against the upper face of this gate 62. Thereafter gate 60 is closed, and gate 62 is opened so that particles can be collected in refusal container 64. The above operation of gates 60 and 62 is advantageous, since it prevents any arrival of fresh air into pipe 40, which would disturb drying process. The heaviest particles, collected in container 64, are driven to refusal, or to another appropriate location of the cement clinker plant. Instead of this double gate, other kinds of air tight extractions might be used, for example a rotary air lock.

A mix of dried wastes and gas, at a temperature from 65°C to 100°C, is then admitted into cyclone 70 which ensures a primary separation. Dried wastes exit cyclone 70 and are delivered to reception means 72, while gas potentially still containing a slight fraction of wastes is admitted to bag filter 80, at a temperature from 65°C to 100°C. Bag filter ensures final separation, and a further fraction of dried wastes may be delivered to reception means 72. Dried wastes coming from line 74 and potentially from line 84 are then fed to the burner, via any appropriate means, such as a pneumatic transport device 81.

An appropriate sensor 82 measures the temperature of drying gas, after exiting drying pipe 40. If this measured value is superior to a predetermined temperature threshold, for example 75°C at exit of bag filter 80, a control line 84 actuates a valve 86 on fresh air line 54, in order to increase the flow rate of fresh air. Therefore, the proportion of hot exhaust gas in global drying gas is lowered, so that temperature of drying gas decreases, both upstream and downstream drying pipe. On the contrary, if measured value is inferior to above threshold, the flow rate of fresh air is decreased, in order to raise the temperature of drying gas, both upstream and downstream drying pipe. It is to be noted that drying gas mainly comprises exhaust gas, in either operating configuration.

Gas substantially free from wastes, also called final drying gas, exits bag filter 80 via exhaust line 90, at a temperature typically from 65°C to 100°C. In a first embodiment, this final gas is sent to a chimney, not shown on the figures. However, in particular if this final gas has a significant unpleasant smell, it may be advantageous to carry out a further treatment of this final gas, as shown in figures 3 and 4.

These figures illustrate a part of a plant for manufacturing cement clinker. This plant usually comprises a rotary kiln 100, provided with a partly shown fuel line 102. Clinker produced in this kiln passes to a clinker cooler 110, which comprises an upper cooling area 112, and several lower compartments 114. Each of the latter has a feeding line for fresh air, a fan and an upper face provided with holes, which enable air to pass into area 112 and to cool hot clinker. According to the location of the compartments 114, cooling air is driven either into the kiln 100, either to a line 130 as excess cooling air. This excess air typically passes into an electro-filter and/or a heat exchanger and/or a bag filter 132, and is fed to a chimney 134 via a fan 136.

According to the invention, it is advantageous to drive final drying gas, via exhaust line 90, into clinker cooler 110. Figure 4 illustrates one specific compartment 114' with its feeding line 116' provided with its fan 118'. A chamber 150 is provided at the upstream end of this line 116'. This chamber receives both a fresh air line 152, and the downstream end 90' of above described exhaust line 90. Moreover a mobile flap 154 closes the downstream port, i.e. the outlet of fresh air line 152.

In operation, the interior volume of chamber 150 is kept at negative pressure. Final drying gas enters the chamber, via end 90'. The mobile flap 154 is controlled to keep the pressure in chamber 150 negative, while fan 118' is operated according to the cooling flow demands of the kiln with keeping its typical settings. A mix of fresh air and final drying gas is then admitted into compartment and into cooling area, through holes 120'.

There are two main possibilities, concerning the location of specific compartment 114'. Referring back to figure 3, this compartment, which is given reference numeral 114'₁, can be positioned on the side of the cooler, adjacent to kiln 100. Therefore, final drying gas is fed into this compartment, cools clinker in area 112 and passes into kiln 100 along arrow f1. This embodiment, shown in dotted lines, is advantageous since it completely destroys unpleasant smell, as well as potential dangerous emissions, contained in final drying gas, since the latter is reintroduced into the kiln.

As an alternative, specific compartment, which is given reference numeral 114'₂, may be positioned on the side of the cooler, opposite to kiln 100. Therefore, final drying gas is fed into this compartment, cools clinker in area 112, passes into line 130 along arrow f2 and is sent to chimney 134, via fan 136. This embodiment, shown in phantom, is advantageous since hot clinker bed KK destroys at least part of the smell and the potential dangerous emissions, while the operation of the kiln is not disturbed. As an alternative, the inlet fan of two or more compartments may be fed with final drying gas.

According to a not shown embodiment, there may be two further control loops. The gas volume may be controlled with the fan 92, preferably speed controlled, optionally damper controlled, to adjust the desired residence time as well as the fall through. The pressure at the inlet 42 may be controlled to slight negative pressure with fan 56, preferably speed controlled, optionally damper controlled. Optionally the process may be carried out without fan 56, depending on the location of the drying pipe, mainly its distance to the cooler exhaust.

The following example illustrates, but does not limit, the invention.

### EXAMPLE

An equipment according to that shown in figure 1 was used. The shredding apparatus comprised a primary shredder - magnetic separator, simple wind shifter - with about 5% fall out, and a secondary shredder. The input material was constituted by municipal wastes. At the outlet of shredding apparatus, the largest dimension of the particles of wastes was about 35 mm. The drying pipe 40 was about 37 meters long, with a diameter of 600 mm. It comprised an upwards section 44 of about 25 meters high, a curve section 46 and a downwards section 48. An exhaust clinker cooler gas was available at a temperature of 250-300°C, via line 52.

Three successive tests were carried out.

### TEST 1

Wastes were fed at the feeding point 32, with a flow rate of 1 t/h, and an upwards speed SW of 30 m/s. The moisture of these wastes was in the range of 30 to 36%. A drying gas was composed of 50% volume of exhaust cooler gas, and 50% volume of fresh air at 20°C. This drying gas, at a temperature of 170°C, was fed at the bottom of the pipe 40 with a flow rate of 14.000 Nm/h and an upwards speed SG of about 23 m/s. The gas residence time, between feeding point 32 and outlet 50, was about 2 seconds. At the outlet of pipe, dried solid wastes were separated from final drying air.

The moisture of dried wastes was 10% for this first test.

### TEST 2

Wastes were fed at the feeding point 32, with a flow rate of 2 t/h, and an upwards speed SW of 30 m/s. The moisture of these wastes was in the range of 30 to 36%. A drying gas was composed of 60% volume of exhaust cooler gas, and 40% volume of fresh air at 20°C. This drying gas, at a temperature of 200°C, was fed at the bottom of the pipe 40 with a flow rate of 15.000 Nm/h and an upwards speed SG of about 26 m/s. The gas residence time, between feeding point 32 and outlet 50, was about 1.9 seconds. At the outlet of pipe, dried solid wastes were separated from final drying air.

The moisture of dried wastes was 7% for this second test.

### TEST 3

Wastes were fed at the feeding point 32, with a flow rate of 3 t/h, and an upwards speed SW of 30 m/s. The moisture of these wastes was in the range of 30 to 36%. A drying gas was composed of 65% volume of exhaust cooler gas, and 35% volume of fresh air at 20°C. This drying gas, at a temperature of 210°C, was fed at the bottom of the pipe 40 with a flow rate of 16.000 Nm/h and an upwards speed SG of about 28 m/s. The gas residence time, between feeding point 32 and outlet 50, was about 1.8 seconds. At the outlet of pipe, dried solid wastes were separated from final drying air.

The moisture of dried wastes was 15% for this third test.

For each of these tests, material consisting only of stones and glass was collected in container 64. Substantially all the solid wastes were captured in cyclone 70. No solid material was coming out of bag filter 80.

## Claims

1. A process for drying solid wastes comprising:
- providing a drying pipe (40) comprising an upwards section (44);
- feeding solid wastes to be dried at a feeding point (32), located at the bottom of said upwards section;
- feeding a drying gas in said upwards section at a speed superior to 15 m/s, in particular to 20 m/s, said drying gas comprising exhaust gas from a clinker cooler, so as to create an upwards flow of said wastes in said upwards section; and
- separating a final drying gas and dried solid wastes, downstream drying pipe.

2. The process according to claim 1, wherein the gas residence time in drying pipe (40) is less than approximately 5 seconds, and in particular is from 1 to 5 seconds, preferably from 1.5 to 3 seconds.

3. The process according to claim 1 or 2, wherein the height (H) of upwards section is more than approximately 20 meters, and in particular is from 30 to 40 meters.

4. The process according to any one of the preceding claims, wherein the cross-section, in particular the diameter (D), of drying pipe is less than approximately 1500 mm, and in particular is from 500 to 1000 mm.

5. The process according to any one of the preceding claims, wherein the whole length of drying pipe is more than approximately 25 meters, and in particular is from 30 to 80 meters.

6. The process according to any one of the preceding claims, wherein wastes are fed at feeding point with an upwards speed, in particular an upwards speed superior to 20 m/s.

7. The process according to any one of the preceding claims, wherein drying gas is fed in drying pipe at a temperature from 125 to 300°C, preferably from 150 to 220°C.

8. The process according to any one of the preceding claims, wherein exhaust gas is diluted with fresh air before feeding point, and the flow rate of fresh air is controlled as a function of the temperature of drying gas downstream drying pipe.

9. The process according to any one of the preceding claims, wherein drying pipe also comprises a downwards section (48), separated from upwards section (44) by a curve section (46).

10. A process for manufacturing cement clinker, comprising drying solid wastes with a drying process according to any one of preceding claims, feeding dried solid wastes as a fuel in a burner of a calciner and/or in a burner of a kiln, calcining raw meal in said calciner and sintering raw meal in said kiln to obtain said cement clinker.

11. The process according to the preceding claim, wherein final drying gas is sent to a clinker cooler (110).

12. The process according to the preceding claim, wherein final drying gas is sent to the inlet fan (118') of at least one compartment (114') of said clinker cooler, said fan being connected with an upstream chamber (150) receiving fresh air, via a fresh air line (152) provided with a mobile flap (154).

13. An equipment for drying solid wastes comprising:
- a drying pipe (40) comprising at least an upwards section (44);
- a means (28) for feeding solid wastes to be dried at a feeding point (32), located at the bottom of said upwards section;
- a means (52, 54) for feeding a drying gas in said upwards section at a speed superior to 15 m/s, in particular to 20 m/s, said drying gas comprising exhaust gas from a clinker cooler, so as to create an upwards flow of said wastes in said upwards section;
- a means (70, 80) for separating a final drying gas and dried solid wastes.

14. A plant for manufacturing cement clinker, comprising a calciner to calcine raw meal, a kiln for sintering raw meal, and an equipment according to claim 13, said plant also comprising means (81) for delivering said dried solid wastes, said delivering means being connected with a burner of said calciner and/or a burner of said kiln.

15. The plant according to the preceding claim, further comprising a clinker cooler (110) provided with several compartments, at least one (114') of the compartments being connected with a preliminary chamber (150) receiving a fresh air line (152) provided with a mobile flap (154), as well as a further line (90) for feeding final drying gas.
